# EUROPEAN PATENT APPLICATION

(11) **EP 2 136 294 A1**
(43) Date of publication of application: **23.12.2009**
(21) Application number: 09156756.0
(22) Date of filing: 30.03.2009
(51) Int. Cl.: G06F 9/445

(54) **Method for updating system control program, display apparatus, and server thereof**

(30) Priority: 20.06.2008 KR 20080058597
(71) Applicant: Samsung Electronics Co., Ltd., Suwon-si, Gyeonggi-do 442-742 (KR)
(72) Inventor: Ha, Byeong-woon, Suwon-si (KR); Noh, Young-joong, Suwon-si (KR)
(74) Representative: Waddington, Richard

(57) **Abstract**

An update method of a system control program of a display apparatus (100) is provided. The update method includes requesting a system control program for update to a server (200), selecting contents which are reproducible by the requested system control program for update, and sending the requested system control program for update and the selected contents to a display apparatus (100).

## Description

### BACKGROUND OF THE INVENTION

### 1. Field of the Invention

Methods and apparatuses consistent with the present invention relate to updating a system control program of a display apparatus, and more particularly to a display apparatus which is provided a system control program for update and contents which is reproducible by the system control program for update.

### 2. Description of the Related Art

A display apparatus receives an image signal from an external source, processes the image signal, and displays the image. For example, a television receives broadcast signals from cable or satellite sources, processes the broadcast signals to broadcast contents for each channel, and displays the processed images.

The display apparatus has a memory such as a Flash read only memory (ROM). The memory of the display apparatus stores a system control program which is used for driving and controlling the display apparatus. If the display apparatus is turned on, the system control program is executed, checks functions of the display apparatus, and controls the display apparatus according to a predetermined routine.

The system control program is updated for adding new functions and correcting errors of some functions of the system control program. A manufacturer of the display apparatus provides a system control program for update using a server. A user downloads the system control program for update from the server to a personal computer and sends the downloaded system control program for update to the display apparatus. The display apparatus may receive and reproduce various kinds of digitally filed contents according to a user's preference in addition to basic broadcast contents.

Because the system control program for update and the digitally filed contents are chosen separately, the digitally filed contents may not be reproducible by the system control program for update.

### SUMMARY OF THE INVENTION

An aspect of the present invention is to provide a display apparatus receiving contents related to a system control program for update and the system control program for update together if the display apparatus requests update of a system control program prestored in the display apparatus, a server thereof and an update method thereof.

According to the present invention there is provided an apparatus and method as set forth in the appended claims. Other features of the invention will be apparent from the dependent claims, and the description which follows.

According to an aspect of the invention, there is provided an update method for a system control program of a display apparatus which comprises requesting a system control program for update to a server, selecting contents which are reproducible by the requested system control program for update, and sending the requested system control program for update and the selected contents to a display apparatus. The sending the system control program for update and the selected contents may comprise merging the requested system control program for update and the selected contents into a file, and sending the merged file to the display apparatus. The selecting contents may comprise displaying a list of contents which are reproducible by the requested system control program for update.

The requesting the system control program for update may comprise sending model information of the display apparatus and version information of a system control program prestored in the display apparatus to the server. The selecting the contents may comprise selecting the requested system control program for update based on the model information of the display apparatus and the version information of the system control program prestored in the display apparatus. The requesting the system control program for update may comprise displaying a list of system control programs provided by the server. The update method may further comprise displaying completion of transmission of the requested system control program for update and the selected contents. The sending the requested system control program for update and the selected contents may comprise sending at least one contents. The update method may further comprise uploading contents for the display apparatus before selecting the contents which are reproducible by the requested system control program for update. The uploading the contents may comprise storing the uploaded contents in the server for providing the uploaded contents if the requested system control program for update is able to reproduce the uploaded contents. The sending the requested system control program for update and the selected contents may comprise sending a system control program for update which is able to reproduce the uploaded contents if the uploaded contents are not reproducible by a system control program prestored in the display apparatus.

According to another aspect of the invention, there is provided a display apparatus which comprises a display unit, a storage unit which stores a system control program of a display apparatus, and a control unit which requests update of the system control program, receives the requested system control program for update and contents which are reproducible by the requested system control program for update from a server, updates the system control program prestored in the storage unit to the received system control program for update, and stores the received contents in the storage unit. The control unit may receive the requested system control program for update and contents as a merged file. The display apparatus may further comprise an on screen display (OSD) processing unit which processes a list of the contents, which are reproducible by the requested system control program for update, to be displayed on the display unit.

The OSD processing unit may process a list of system control programs provided by the server to be displayed on the display unit. The OSD processing unit may process a notice signal to be displayed on the display unit if transmission of the requested system control program for update and the selected contents is completed. The control unit may send model information of the display apparatus and version information of a system control program prestored in the display apparatus when the control unit requests the system control program for update. The control unit may upload at least one contents prestored in the storage unit to the server. The control unit may receive a system control program for update which is able to reproduce the uploaded at least one contents if the uploaded at least one contents are not reproducible by a system control program prestored in the display apparatus.

According to another aspect of the invention, there is provided a server which communicates with a display apparatus, which comprises a storage unit which stores a system control program for a display apparatus and contents for the display apparatus and a control unit which, if an update request for a system control program is received from the display apparatus, sends the requested system control program for update and contents which are reproducible by the requested system control program for update to the display apparatus. The control unit may send the requested system control program for update and the contents as a merged file. The control unit may provide a list of contents, which are reproducible by the requested system control program for update, to the display apparatus. The control unit may receive model information of th e display apparatus an d version information of a system control program prestored in the display apparatus and determine the requested system control program for update based on the model information of the display apparatus and the version information.

The control unit may send a list of system control programs provided by the server to the display apparatus. The control unit may send at least one contents to the display apparatus. The control unit may receive contents from the display apparatus and store the contents in the storage unit. The control unit may send a system control program for update which is able to reproduce the received contents to the display apparatus if the received contents are not reproducible by a system control program prestored in the display apparatus.

### BRIEF DESCRIPTION OF THE DRAWINGS

The above and other aspects and features of the present invention will be apparent from the following detailed description of exemplary embodiments taken in conjunction with the accompanying drawings, in which:
FIG. 1 illustrates a block diagram of a display apparatus an d a server according to an exemplary embodiment of the present invention;
FIG. 2 illustrates a flow chart of the operations of the display apparatus according to an exemplary embodiment of the invention;
FIG. 3 illustrates displaying a list of system control programs stored in a server on a display apparatus according to an exemplary embodiment of the invention;
FIG. 4 illustrates a flow chart of operations of a server according to an exemplary embodiment of the invention;
FIG. 5 illustrates a flow chart of operations according to an exemplary embodiment of the invention;
FIG. 6 illustrates a flow chart of operations of a display apparatus according to an exemplary embodiment of the invention;
FIG. 7 illustrates a flow chart of operations of a server according to an exemplary embodiment of the invention; and
FIG. 8 illustrates a flow chart of operations of a display apparatus according to an exemplary embodiment of the invention.

### DETAILED DESCRIPTION OF EXEMPLARY EMBODIMENTS OF THE INVENTION

Hereinafter, exemplary embodiments of the present invention will be described in detail with reference to the accompanying drawings. The aspects and features of the present invention and methods for achieving the aspects and features will be apparent by referring to the exemplary embodiments to be described in detail with reference to the accompanying drawings. However, the present invention is no t limited t o th e exemplary embodiments disclosed hereinafter, but can be implemented in diverse forms. The matters defined in the description, such as the detailed construction and elements, are merely specific details provided to assist those of ordinary skill in the art in a comprehensive understanding of the invention, and the present invention is only defined within the scope of the appended claims.

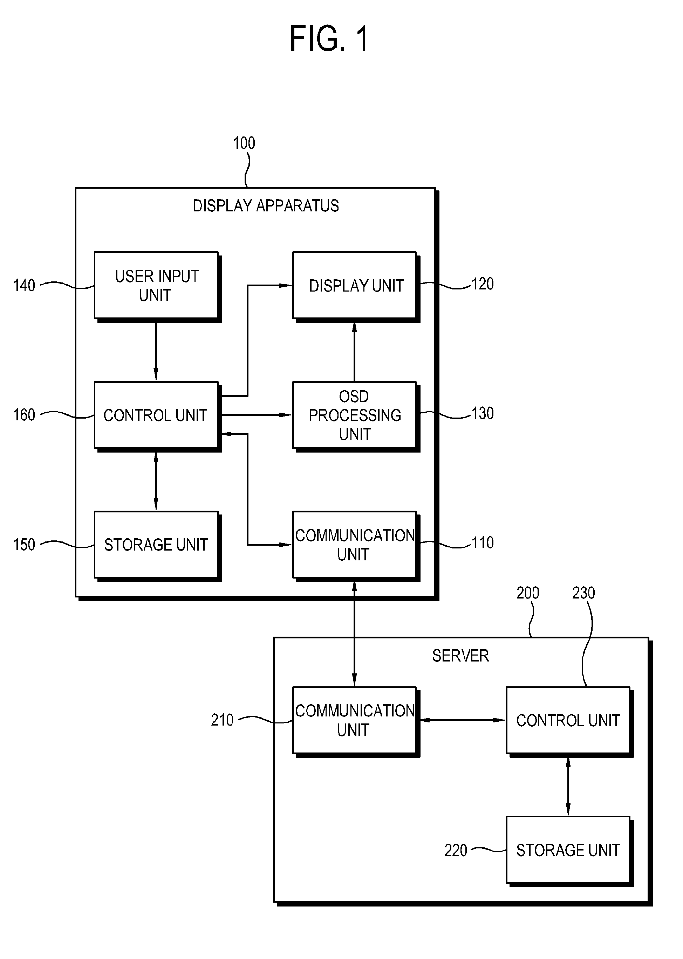

FIG. 1 illustrates a block diagram of a display apparatus 100 and a server 200 according to an exemplary embodiment of the present invention. Referring to FIG. 1, the display apparatus 100 and the server 200 send and receive a data request signal and response data. There may be various communication methods between the display apparatus 100 and the server 200. TCP/IP protocol may be an example of the communication method.

The display apparatus 100 may be implemented as a television which receives an image signal and displays the image. The television may receive an image signal through a cable, an antenna, or a satellite from various image sources. An example of the display apparatus 100 is not limited to a television.

The display apparatus 100 stores a system control program for driving and controlling a system. The system control program is a group of detail programs or routines for controlling hardware of the display apparatus 100, starts to operate when turned on, and performs controls of operations of the display apparatus 100.

The system control program may be implemented as various kinds of structures. For example, the system control program may be programmed to operate an input-output system program, an operating system, various kinds of applications, etc., hierarchically. The system control program needs to be updated for adding functions, correcting errors, etc. A manufacturer of the display apparatus 100 may distribute a system control program for update by storing the system control program for update in the server 200 which is connectable through a network.

The server 200 provides the system control program for update to at least one terminal which is connected through a network, which is the display apparatus 100 in this exemplary embodiment. The display apparatus 100 may request update of the system control program to the server 200.

The server 200 may send the requested system control program for update and various kinds of contents which may be performed by the requested system control program for update together. A game which is coded using a flash or a Java format, a picture, a drawing, and a document may be examples of the contents. The system control program includes applications for reproducing the contents.

If the server 200 receives the request for update from the display apparatus 100, the server 200 may provide a list for contents which may be performed in the display apparatus 100 considering a model of the display apparatus 100 and a version of the updated system control program. Selecting contents in the list prevents contents which can not be performed in the display apparatus 100 from being received from the server 200.

The display apparatus 100 according to an exemplary embodiment of the invention includes a communication unit 110 which communicates with the server 200, a display unit 120 which displays an image, an on screen display (OSD) processing unit 130 which processes an OSD window to be displayed on the display unit 120, a user input unit 140 which receives a user command, a storage unit 150 which stores the system control program and the contents, and a control unit 160 which controls updating of the system control program and storing of the contents.

The communication unit 110 is provided for the display apparatus 100 to communicate with the server 200. For example, if the server 200 uses the TCP/IP protocol, the communication unit 110 supports the same or the corresponding communication method to enable two way communication between the display apparatus 100 and the server 200.

The communication unit 110 sends an update request signal and selection information of the system control program for update and the contents to the server 200, and receives the system control program for update and the contents from the server 200 by control of the control unit 160.

The display unit 120 displays an image received by the display apparatus 100. A liquid crystal display (LCD) and a plasma display panel (PDP) may be examples of the display unit 120. But the display unit 120 is not limited to these examples. The display unit 120 may display the OSD window processed by the OSD processing unit 130 and the contents reproduced by the system control program.

The OSD processing unit 130 processes menus or options such as messages the control unit 160 notices to a user and menus for setting a tuning of the display apparatus 100, which a user may select using the user input unit 140, to be displayed on the display unit 120 by providing the OSD window.

If lists of the system control programs or contents are provided, the OSD processing unit 130 processes the lists to be displayed on the display unit 120. If the server 200 provides the lists based on the world wide web environment, the OSD processing unit 130 may generate the lists as the OSD window corresponding to the environment of the server 200. A user may view the lists processed by the OSD generating unit 130 and select an item in the lists through the user input unit 140.

The user input unit 140 provides for a user to manipulate the user input unit 140 and to control operations of the display apparatus 100 by transmitting information of a user manipulation to the control unit 160. The user input unit 140 may be implemented as menu keys provided outside of the display apparatus 100, a remote controller, a touch pad, or a touch screen. However, the user input unit 140 is not limited to these

### examples.

The storage unit 150 stores the system control program of the display apparatus 100 and the contents. The storage unit 150 may be implemented as a nonvolatile storage unit such as a Flash ROM, which enables data updating, writing and deleting and does not loose stored data even if the display apparatus 100 is turned off. The storage unit 150 enables the control unit 160 to access the stored data for reproducing and performing the stored system control program and the contents.

If the control unit 160 determines that the stored system control program needs to be updated, the control unit 160 requests update of the system control program to the server 200. There may be various bases for determining whether the stored system control program needs to be updated. For example, if there is a command input for updating the system control program through the user input unit 140, the control unit 160 determines that there is a need for an update.

If the display apparatus 100 receives the list of system control programs or of the contents from the server 200 as a response to the request, the control unit 160 controls the OSD generating unit 130 to display the list on the display unit 120. A user may select a system control program or contents from the list using the user input unit 140. The control unit 160 notifies the server 200 which system control program or contents a user selected to the server 200. The server 200 sends the selected system control program or the contents to the display apparatus 100.

The contents which the control unit 160 may receive from the server 200 are the contents which are reproducible using the system control program for update in the model of the display apparatus 100. If the control unit 160 selects an updated system control program, the server 200 provides to the control unit 160 a list of contents which is reproducible using the updated system control program. Therefore, a user may select contents which are reproducible using the system control program for update in the model of the display apparatus 100.

If the communication unit 110 receives the system control program for update and the contents, the control unit 160 updates the prestored system control program to the system control program for update and stores the contents in the storage unit 150. A RAM may be provided for storing the system control program for update and the contents received from the server 200 temporarily. While the system control program is updated, the received system control program for update and the contents may be stored in the RAM. If the update is completed, the RAM may be reset.

If prestored contents or broadcast images are reproduced and displayed on the display unit 120 while the system control program for update and the contents is received, the control unit 160 receives the system control program for update and the contents continuously without stopping the reproducing and the displaying. The control unit 160 controls the OSD generating unit 130 to display a rate or a status of receiving the system control program for update and the contents on at least a part of the display unit 120.

For example, while a broadcast image is displayed on the display unit 120, the percentage of the system control program for update and the percentage of the contents that have been received or the status of networking with the server 200 may be displayed on a part of the display unit 120.

If the control unit 160 receives a command for reproducing the contents stored in the storage unit 150 from the user input unit 140, the control unit 160 reads the contents from the storage unit 150 and controls the system control program to perform the contents. The system control program includes a contents reproducing application and may reproduce the contents using the contents reproducing application.

Hereinafter, elements of the server 200 according to an exemplary embodiment of the invention are explained.

The server 200 includes a communication unit 210 which communicates with a terminal such as the display apparatus 100, a storage unit 220 which stores the system control program for update and the contents for providing to the display apparatus 100 and, a control unit 230.

The communication unit 210 uses a communication protocol corresponding to the communication protocol of the communication unit 110 for two way communication between the display apparatus 100 and the server 200. The communication unit 210 sends and receives information and data with the display apparatus 100 by control of the control unit 230.

The storage unit 220 stores updated system control programs corresponding to various kinds of models of the display apparatus 100 and various kinds of contents. The storage unit 220 needs a mass storage capacity and may be implemented as a nonvolatile mass storage medium such as a hard disc drive (HDD).

The storage unit 220 enables the control unit 230 to access the stored updated system control programs and the stored contents for providing the lists and data responding to the request from the display apparatus 100.

If the control unit 230 receives an update request for the system control program from the display apparatus 100, the control unit 230 provides a list of system control programs stored in the storage unit 220 to the display apparatus 100. Therefore, the list may be displayed on the display unit 120 of the display apparatus 100.

If a system control program in the list is selected, the control unit 230 provides a list of contents which may be reproduced using the selected system control program for update among the stored contents in the storage unit 220. The control unit 230 may provide the lists of system control programs and the contents using a world wide web. Therefore, the lists may be accessible not by a display apparatus such as a television but by a computer.

If a system control program for update and contents is selected in the display apparatus 100, the control unit 230 sends the selected system control program for update and the selected contents to the display apparatus 100 through the communication unit 210.

The control unit 230 may merge the selected system control program for update and the selected contents into a file or a package program and send the merged file or the package program to the display apparatus 100. The package program is a program including a plurality of data for the contents to be reproduced by the system control program.

The control unit 230 may help an update process of the display apparatus 100 to be performed easily by the merge process. It is more desirable for the server 200 than the display apparatus 100 to perform the merge process because the server 200 generally has better processing capacity than the display apparatus 100. The display apparatus 100 may perform the update process easily because the display apparatus 100 does not need to perform the merge process.

An exemplary embodiment of the invention in which the control unit 230 provides the list of system control programs responding to the update request, is explained. However, the invention is not limited to the exemplary embodiment.

For example, other exemplary embodiments of the invention in which the storage unit 220 stores a latest system control program for each model and the display apparatus 100 sends its model information to the server 200 when the display apparatus 100 requests update, is possible. In this case, the server 200 does not need to provide the list of updated system control programs to the display apparatus 100. The control unit 230 selects the latest system control program for the model of the display apparatus 100 and provides the contents for the system control program to the display apparatus 100.

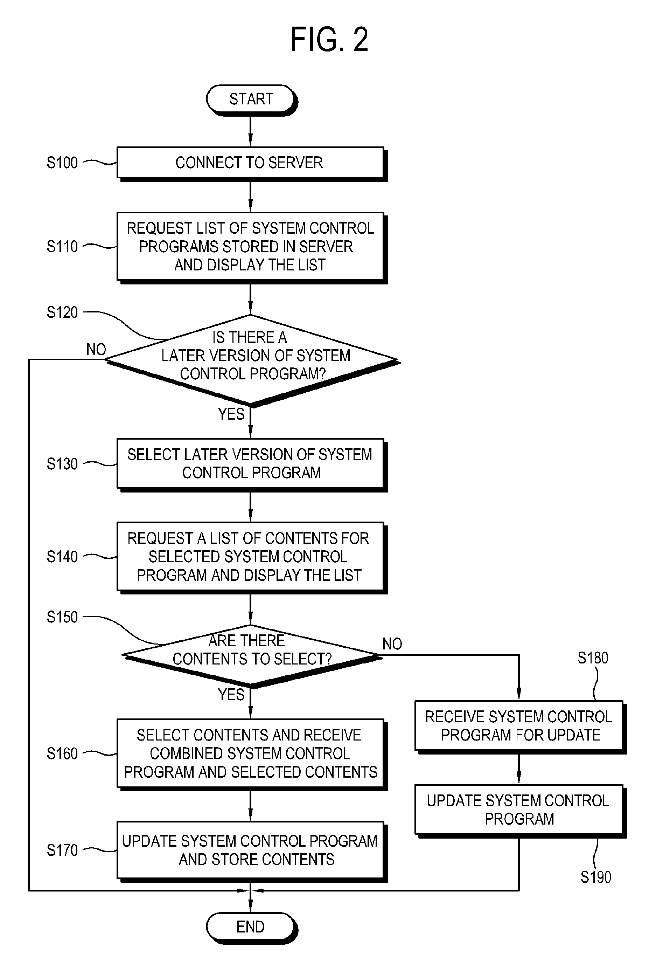

FIG. 2 illustrates a flow chart of the operations of the display apparatus 100 according to an exemplary embodiment of the invention.

The display apparatus 100 connects to the server 200 according to a command of the user input unit 140 in the state that two way communication between the communication unit 110 and the communication unit 210 is available (S100).

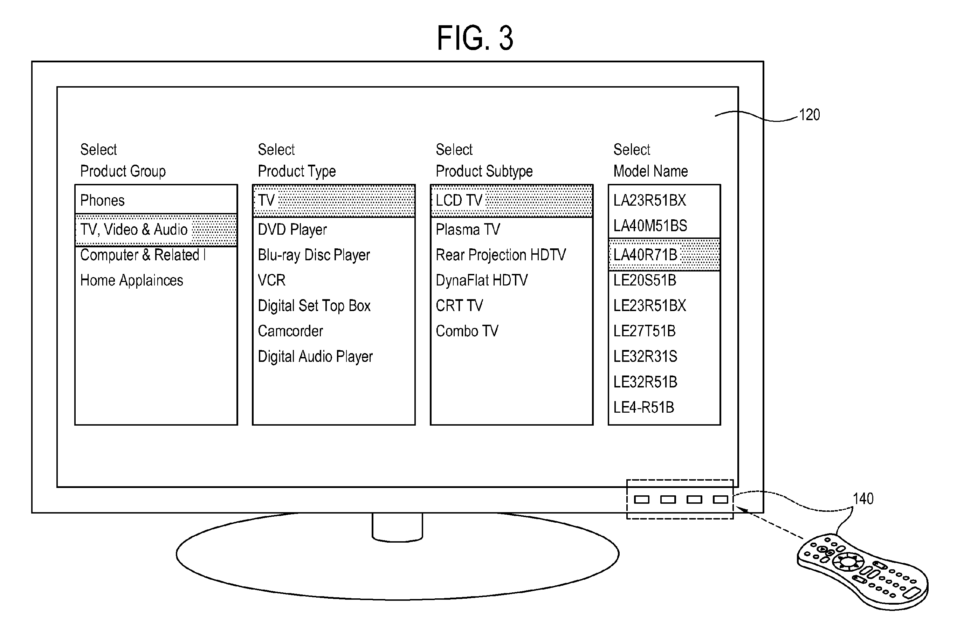

The control unit 160 requests update of the system control program to the sever 200. In detail, the control unit 160 requests a list of system control programs stored in the server 200 and if the display apparatus 100 receives the requested list, the display apparatus 100 processes the received list by the OSD processing unit 130 and displays the received list on the display unit 120 (S110). Refer to FIG. 3.

A user checks whether there is a later version of the system control program for the model of the display apparatus 100 than the version already stored in the display apparatus 100 in the displayed list (S120). If there is no later version, the update process is finished. However, if there is a later version, a user selects the later version of system control program using the user input unit 140 (S130).

The control unit 160 sends the selection information to the server 200. The server 200 provides a list of contents for the selected system control program to the display apparatus 100. The control unit 160 controls the OSD processing unit 130 for the list of contents to be displayed on the display unit 120 (S140). The contents in the list is for the model of the display apparatus 100 and reproducible by the updated system control program.

A user checks whether there are contents to select in the contents list (S150). If there are contents to select, a user selects at least one contents using the user input unit 140 and the control unit 160 sends the selection information to the server 200 and receives a file to which the selected system control program and the selected contents are combined (S160).

If the selected system control program and the selected contents are combined, the server 200 may send a message to indicate whether or not there is a combination.

If reception of the selected system control program and the selected contents is completed, the control unit 160 controls the OSD processing unit 130 to display a message indicating completion of reception. If transmission of the system control program and contents is not completed because of communication trouble, the message may help a user to cope with the situation.

The control unit 160 updates the prestored system control program to the received system control program and stores the received contents (S170).

If there are no contents to select in the operation S150, the control unit 160 so notifies the server 200. The control unit 160 receives system control program for update from the server 200 (S180) and performs update (S190).

If the update is completed, the control unit 160 executes the system control program for update and checks a status of the display apparatus 100. The stored contents in the storage unit 150 may be reproduced by the system control program for update according to a predetermined condition such as a reproduction command by the user input unit 140.

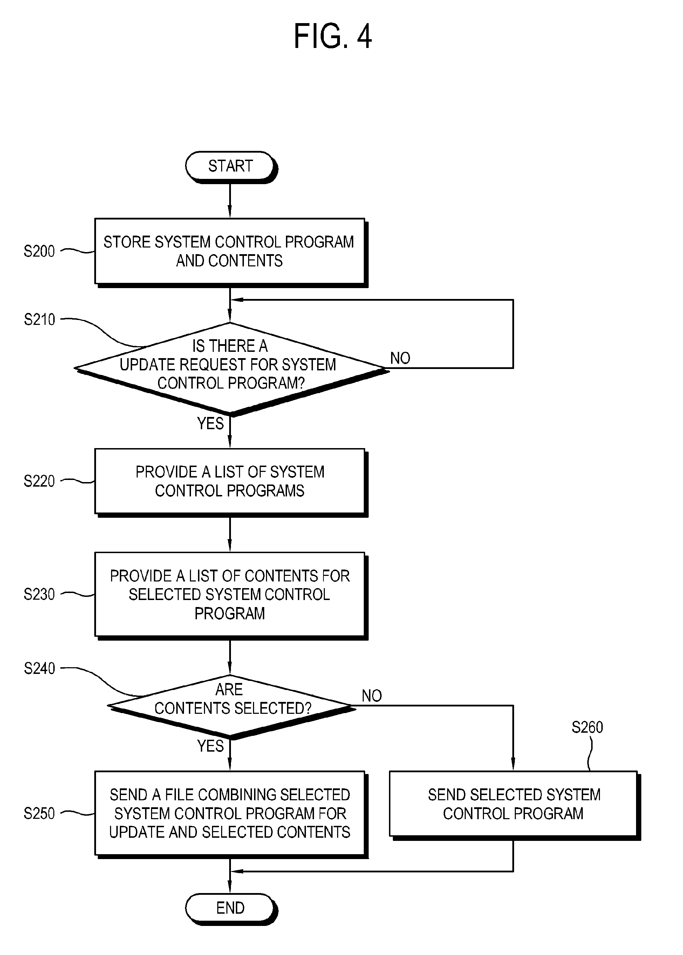

FIG. 4 illustrates a flow chart of operations of the server 200 according to an exemplary embodiment of the invention.

Storage unit 220 stores a system control program for update for each model of the display apparatus 100 and various kinds of contents (S200). The system control program and the content may be added or substituted continuously by the manufacturer of the display apparatus 100.

The control unit 230 monitors whether there is an update request for the system control program from the display apparatus 100 in a situation that the server 200 and the display apparatus 100 are connected (S210).

If there is no update request, the control unit 230 performs the monitoring continuously. If there is an update request, the control unit 230 provides a list of system control programs stored in the storage unit 220 to the display apparatus 100 (S220). A list of system control programs as shown in FIG. 3 may be displayed on the display apparatus 100.

If a system control program for update is selected in the provided list, the control unit 230 provides a list of contents for the selected system control program to the display apparatus 100 (S230).

The control unit 230 determines whether there are selected contents in the display apparatus 100 (S240).

If there are selected contents, the control unit 230 sends a file combining the selected system control program for update and the selected contents (S250).

If there are no selected contents, the control unit 230 sends the selected system control program for update to the display apparatus 100 (S260) and finishes the transmission process.

Providing a list of system control programs to the display apparatus 100 is explained in this exemplary embodiment of the invention, but there are other exemplary embodiments which do not provide the list of system control programs.

For example, when the display apparatus 100 requests update (S210), the display apparatus 100 may send a model information of the display apparatus 100 and version information of the present system control program which the display apparatus 100 has. The control unit 230 may select the latest version of the system control program based on the received information and provide a list of contents for the latest version of the system control program to the display apparatus 100.

In this manner, if the display apparatus 100 requests an update to the server 200, the display apparatus 100 may be provided the contents reproducible by the system control program for update.

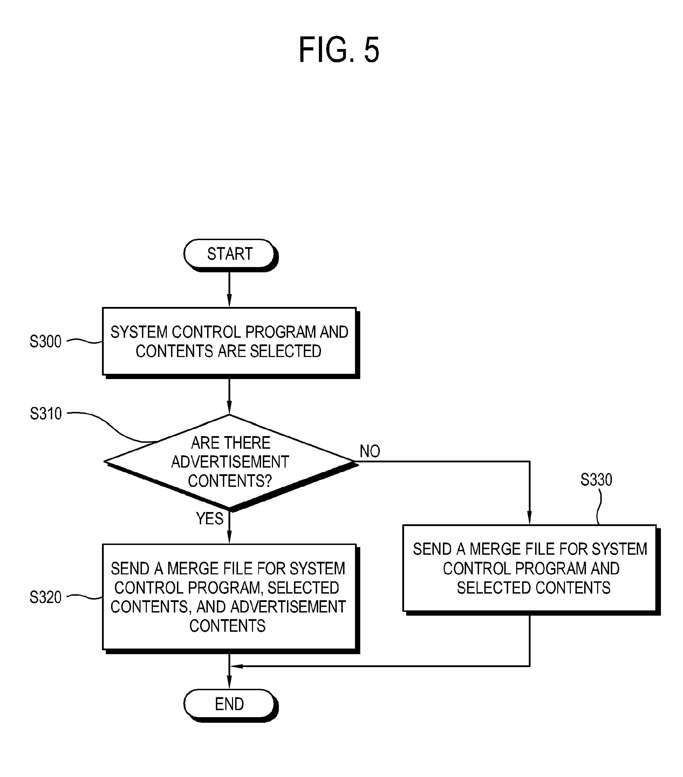

This exemplary embodiment shows the case that the server 200 provides the selected contents to the display apparatus 100. However, other exemplary embodiments in which the server 200 sends other contents than the selected contents to the display apparatus 100 are possible. Another exemplary embodiment is explained referring to FIG. 5.

FIG. 5 illustrates a flow chart of operations according to another exemplary embodiment of the invention. Referring to FIG. 5, the control unit 230 may send other contents than the selected contents to the display apparatus 100.

For example, an advertisement for the manufacturer of the display apparatus 100 may be provided. The advertisement may include information about other models of th e manufacturer, introduction of new functions provided by the updated system control program, an advertisement of contents, etc. The advertisement may be implemented as at least one of a text, a picture, a drawing, and an image.

The advertisement contents which is sent from the server 200 to the display apparatus 100, is stored together with the selected contents in the storage unit 150. According to a predetermined condition, the advertisement contents may be displayed as a background when the display apparatus 100 is in a selection mode or be displayed as a picture in picture (PIP) type or a pop up type at a predetermined time. The manufacturer of the display apparatus 100 may advertise the manufacturer by the advertisement contents.

Hereinafter, the operations for the server 200 to send the advertisement contents to the display apparatus 100 are explained.

A system control program and contents are selected in the display apparatus 100 (S300). The control unit 230 checks whether there are advertisement contents in the storage unit 220 (S310).

If there are advertisement contents, the control unit 230 sends a file combining a system control program for update, selected contents, and advertisement contents to the display apparatus 100 (S320). The storage unit 150 of the display apparatus 100 stores the system control program for update, the selected contents, and the advertisement contents together.

If there are no advertisement contents, the control unit 230 sends a file combining a system control program for update and selected contents to the display apparatus 100 (S330) and finishes the transmission.

Advertisement effect is expected b y providing advertisement contents to the display apparatus 100 from the server 200.

Hereinafter, another exemplary embodiment of the invention which uploads the prestored contents in the display apparatus 100 to the server 200 is explained.

Contents from a user may be stored in the storage unit 150 of the display apparatus 100 or in a Universal Serial Bus (USB) memory connected to the display apparatus 100. The control unit 160 may upload the contents to the server 200.

The control unit 230 stores the contents in the storage unit 220 matching a system control program prestored in the storage unit 220. If a update request is received from the display apparatus 100 and the selected system control program for update is the matched system control program, the control unit 230 may include the uploaded contents in the list of contents, which is provided to the display apparatus 100.

Various contents by user's participation may be provided by uploading the contents from a user to the server 200 and by providing the contents to the display apparatus 100.

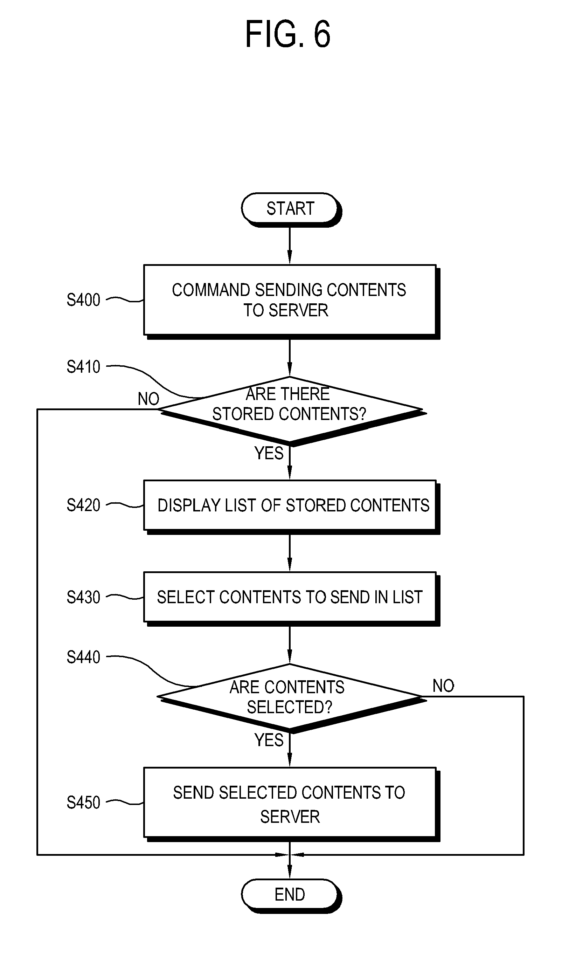

FIG. 6 illustrates a flow chart of operations of the display apparatus 100 according to another exemplary embodiment of the invention.

Referring to FIG. 6, a user commands the display apparatus 100 to send the prestored contents to the server 200 using the user input unit 140 (S400). The control unit 160 confirms whether there are stored contents in the storage unit 15 0 or in an external storage device connected to the display apparatus 100 (S410).

If there are stored contents, the control unit 160 controls the OSD processing unit 130 to display a list of the stored contents. If the list of the stored contents is displayed (S420), a user selects contents to send in the list using the user input unit 140 (S430).

If contents are selected (S440), the control unit 160 uploads or sends the selected contents to the server 200 (S450).

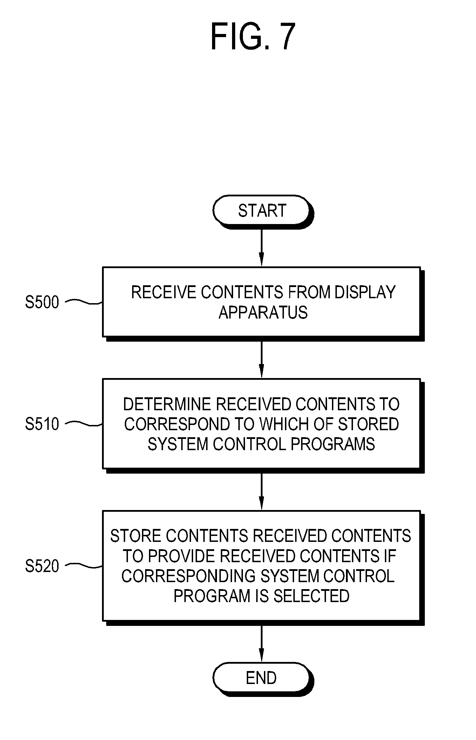

FIG. 7 illustrates a flow chart of operations of the server 200 according to another exemplary embodiment of the invention.

Referring to FIG. 7, if the control unit 230 receives contents from the display apparatus 100 (S500), the control unit 230 determines a kind of a characteristic of the received contents. The determining method is not limited. For example, the control unit 230 may determine the kind and the characteristic by searching metadata written in a header of the received contents.

The control unit 230 determines the received contents that correspond to which system control programs, that is, the received contents is reproducible by which system control programs stored in the storage unit 220, based on the determination (S510). The received contents may match a system control program or a plurality of system control programs.

The control unit 230 stores the received contents in the storage unit 220 to provide the received contents if the corresponding system control program is selected (S520). For example, if the received contents corresponds to a first system control program among prestored system control programs, the first system control program is selected in response to an update request and the control unit 230 includes the received contents when the control unit provides a contents list for the first system control program. This process enables the server 200 to send the uploaded contents from the display apparatus 100 to other display apparatus.

If the display apparatus 100 has stored contents which are not reproducible by a stored system control program, the display apparatus 100 may receive a system control program which may reproduce the stored contents from the server 200.

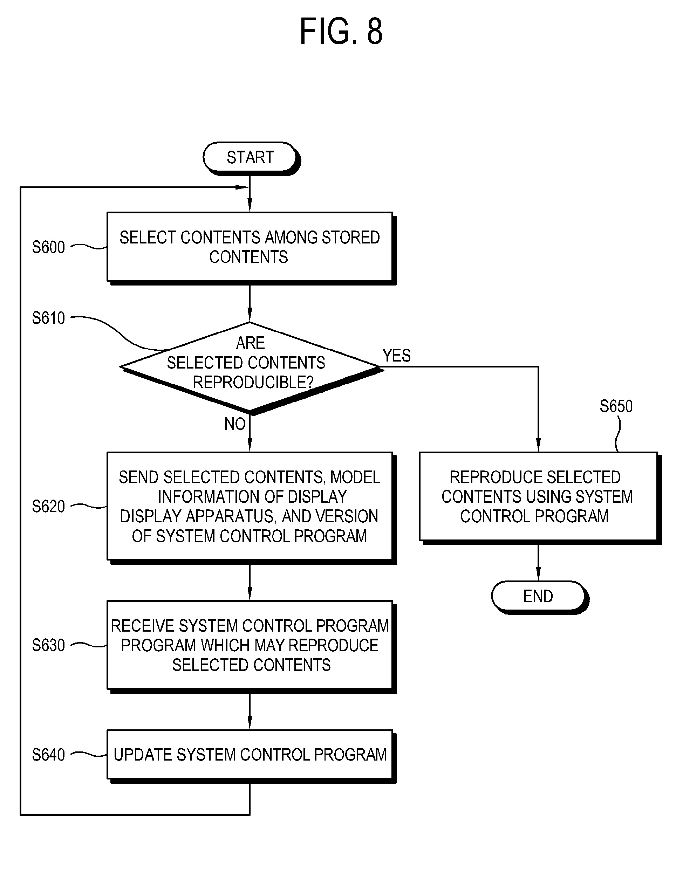

FIG. 8 illustrates a flow chart of operations of the display apparatus 100 according to another exemplary embodiment of the invention.

The control unit 160 selects contents among stored contents in the display apparatus 100 and reproduces the selected contents (S600). The control unit 160 determines whether the selected contents may be reproducible by a system control program stored in the display apparatus 100 (S610).

I f the selected contents are reproducible, the control unit 160 reproduces the selected contents using the system control program stored in the display apparatus 100 (S650).

If the selected contents are not reproducible, the control unit 160 sends the selected contents, model information of the display apparatus 100, and version information of a system control program stored in the storage unit 150 to the server 200 (S620). The server 200 selects a system control program for update which may reproduce the received contents based on the received model and version information and the received contents and provides the selected system control program to the display apparatus 100.

If the display apparatus 100 receives the system control program for update which may reproduce the sent contents from the server 200 (S630), the control unit 160 updates the system control program of the storage unit 150 to the received system control program (S640).

If update is completed, the control unit 160 executes the system control program for update and may reproduce the selected contents using the updated system control program.

If there are contents which are not reproducible by the system control program of the display apparatus 100, the contents may be reproduced by updating the system control program.

According to an exemplary embodiment of the invention, contents which are reproducible by a system control program for update may be received with the system control program for update when a system control program prestored in a display apparatus is updated, and contents which are not reproducible by the system control program for update may be prevented from being provided to the display apparatus.

According to an exemplary embodiment of the invention, a system control program for update and contents may be merged as a file in a server to reduce workload of a display apparatus.

According to an exemplary embodiment of the invention, a display apparatus connected to a server directly may receive a system control program for update and contents, and it may be possible to update a system control program prestored in the display apparatus without using a computer which is connectable to the server.

According to an exemplary embodiment of the invention, a display apparatus may receive a list of system control programs stored in a server and display the list for a user to be able to choose a system control program in the list to enable a user to easily select a system control program for update corresponding to a model of the display apparatus.

According to an exemplary embodiment of the invention, a display apparatus may display completion of transmission of a system control program for update and contents to enable a user to cope with an unexpected status in which transmission of the system control program for update and contents is stopped.

According to an exemplary embodiment of the invention, advertisement contents may be transmitted with a system control program for update from a server and the advertisement contents are reproduced on the display apparatus, so that a manufacturer of the display apparatus may obtain advantages of advertising.

According to an exemplary embodiment of the invention, contents which are stored in a display apparatus may be uploaded to a server and the server may provide the uploaded contents together when a system content program for update which may reproduce the uploaded contents is provided from the server, so that a user may provide various kinds of contents for sharing.

According to an exemplary embodiment of the invention, contents may be stored not in a special storage device such as a hard disk drive but in a nonvolatile storage device with a system control program, and a display apparatus may have a simple structure.

Although exemplary embodiments of the present invention have been described for illustrative purposes, those skilled in the art will appreciate that various modifications, additions and substitutions are possible, without departing from the scope of the invention as disclosed in the accompanying claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including an y accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in th i s specification (including any accompanying claims, abstract and drawings), or to any novel one, or any novel combination, of the steps of any method or process so disclosed.

## Claims

1. An update method for a system control program of a display apparatus, comprising:
requesting a system control program for update to a server (200);
selecting contents which are reproducible by the requested system control program for update; and
sending the requested system control program for update and the selected contents to a display apparatus (100).

2. The update method of claim 1, wherein the sending the system control program for update and the selected contents comprises:
merging the requested system control program for update and the selected contents into a file; and
sending the merged file to the display apparatus (100).

3. The update method of claim 1 or claim 2, wherein the selecting contents comprises displaying a list of contents which are reproducible by the requested system control program for update.

4. The update method of any preceding claim, wherein the requesting the system control program for update comprises sending model information of the display apparatus (100) and version information of a system control program prestored in the display apparatus (100) to the server (200).

5. The update method of claim 4, wherein the selecting the contents comprises selecting the requested system control program for update based on the model information of the display apparatus (100) and the version information of the system control program prestored in the display apparatus (100).

6. The update method of any preceding claim, wherein the requesting the system control program for update comprises displaying a list of system control programs provided by the server (200).

7. The update method of any preceding claim, further comprising displaying completion of transmission of the requested system control program for update and the selected contents.

8. The update method of any preceding claim, wherein the sending the requested system control program for update and the selected contents comprises sending at least one contents.

9. The update method of any preceding claim, further comprising uploading contents for the display apparatus (100) before selecting the contents which are reproducible by the requested system control program for update.

10. The update method of claim 9, wherein the uploading the contents comprises storing the uploaded contents in the server (200) for providing the uploaded contents if the requested system control program for update is able to reproduce the uploaded contents.

11. The update method of claim 9 or claim 10, wherein the sending the requested system control program for update and the selected contents comprises sending a system control program for update which is able to reproduce the uploaded contents if the uploaded contents are not reproducible by a system control program prestored in the display apparatus (100).

12. A display apparatus (100) comprising:
a display unit (120);
a storage unit (150) which stores a system control program of the display apparatus (100); and
a control unit (160) which requests update of the system control program, receives the requested system control program for update and contents which are reproducible by the requested system control program for update from a server (200), updates the system control program prestored in the storage unit (150) to the received system control program for update, and stores the received contents in the storage unit (150).

13. The update method of claim 12, wherein the control unit (160) receives a system control program for update which is able to reproduce the uploaded at least one contents if the uploaded at least one contents are not reproducible by a system control program prestored in the display apparatus (100).

14. A server (200) which communicates with a display apparatus (100), comprising:
a storage unit (150) which stores a system control program for a display apparatus (100) and contents for the display apparatus (100);
a control unit (160) which, if an update request for a system control program is received from the display apparatus (100), sends the requested system control program for update and contents which are reproducible by the requested system control program for update to the display apparatus (100).

15. The server (200) of claim 14, wherein the control unit (160) sends a system control program for update which is able to reproduce the received contents to the display apparatus (100) if the received contents are not reproducible by a system control program prestored in the display apparatus (100).
